# EUROPÄISCHE PATENTANMELDUNG

(11) **EP 4 250 176 A1**
(43) Veröffentlichungstag der Anmeldung: **27.09.2023**
(21) Anmeldenummer: 23157716.4
(22) Anmeldetag: 21.02.2023
(51) Int. Cl.: G06K 17/00, G08C 17/02, G08C 19/00, H04B 1/59

(54) **INTERFACEVORRICHTUNG MIT RFID-TAG, AUTONOME FÖRDERVORRICHTUNG, FÖRDERANLAGE UND VERFAHREN ZUM TRANSPORT VON WERKSTÜCKEN**

(30) Priorität: 22.03.2022 DE 102022106614
(71) Anmelder: Turck Holding GmbH, 58553 Halver (DE)
(72) Erfinder: Lewald, Thomas, 47199 Duisburg (DE); Steiner, René, 58119 Hagen (DE)
(74) Vertreter: DTS Patent- und Rechtsanwälte Schnekenbühl und Partner mbB

(57) **Zusammenfassung**

Die Erfindung betrifft eine Interfacevorrichtung umfassend einen RFID-Tag, der eine Antenne und einen über eine interne Leitung verbundenen RFID-Chip umfasst, insbesondere zur Übermittlung eines RFID-Protokolls, wobei der RFID-Chip einen IC-Datenspeicher umfasst und/oder hiermit verbunden ist, wobei der RFID-Chip ausgebildet und geeignet verbunden ist, um
- Funksignale über die Antenne auszutauschen und zu verarbeiten und/oder
- mit dem IC-Datenspeicher mittels eines ersten Datenprotokolls auszulesen und/oder abzuspeichern, insbesondere über die Antenne austauschbare Daten zu wandeln, wobei ein Mikroprozessor vorgesehen ist, der über eine erste externe Leitung entweder mit dem RFID-Chip und/oder dem IC-Datenspeicher verbunden ist und zweite externe Leitung mit einem Feldbus-System, einer Feldbusleitung und/oder Feldbus-Komponente verbindbar ist. Weiterhin betrifft die Erfindung ein Behandlungsgerät mit dieser Interfacevorrichtung, eine Anlage und ein Verfahren zum Behandeln eines Werkstückes.

## Beschreibung

Die vorliegende Erfindung betrifft eine Interfacevorrichtung nach dem Oberbegriff des Anspruchs 1, ein Behandlungsgerät nach dem Oberbegriff des Anspruchs 6, eine dieses Behandlungsgerät umfassende Anlage nach dem Oberbegriff des Anspruchs 11 und ein Verfahren zum Behandeln eines Werkstückes nach dem Oberbegriff des Anspruchs 12.

In modernen Herstellungs- und Logistikprozessen sind autonome Fahrzeuge (AGV Autonomous Guided Vehicle), die ohne manuelle Eingriffe Waren oder Werkstücke an einer Position aufnehmen, an einer anderen Position wieder übergeben und/oder zur Bearbeitung bereitstellen und fixieren weit verbreitet.

Aus der CN215219510 U ist beispielsweise ein solches AGV bekannt, dass als Steuerung eine Zentraleinheit, ein CAN-Kommunikationsmodul, ein Ethernet-Kommunikationsmodul und ein digitales IO-Modul aufweist, wobei die Zentraleinheit die Bewegung steuert. Mittels eines CAN-Kommunikationsmoduls erfolgt der Anschluss des AGVs, das die Ausführungseinheit steuert und antreibt. Ein Kommunikationsmodul wird zum Verbinden eines Navigationssensors, eines Positionierungssensors und eines Hindernisvermeidungssensors verwendet, um eine Erfassung von Positions- und Hindernissteuerungsinformationen zu realisieren. Weiterhin wird mittels eines Ethernet-Moduls ein Dispatching-System verbunden und digitale IO-Module erfüllen weitere Funktionen.

Aus der CN 213 876 424 U ist ein AGV bekannt, das in einer Produktionsanlage zum Einsatz kommt, wobei ein automatisches Korrektursystem für Größenabweichung vorgesehen ist. Hierbei ist ein RFID -Lese-/Schreibeinheit umfasst, bei welcher ein elektronisches RFID -Tag und die RFID -Lese-/Schreibeinheit mit einer SPS-Steuereinheit kommunizieren, betreffend das zu transportierende Werkstück. Hierbei werden Korbbewegungen mit einer PLC-Steuereinheit über ein Feldbus-System gesteuert, wobei insbesondere Bilddaten ermittelt werden.

Weiterhin ist aus der WO2021/239561 A1 ein autonomes Fahrzeug und ein Verfahren bekannt, bei welchem eine verteilte Systemhardwarearchitektur verwendet wird, um ressourcenintensive oder -kritische Sensordaten in Echtzeit zur Aktor-Nutzung einzusetzen, wozu ein mit dem System verbundenes Cloud Computing angewendet wird.

Die EP 3 761 245 A1 offenbart schließlich eine Fertigungsanlage, in der autonome Robotereinheiten mit selbstfahrenden Transportmitteln (AGV) zusammenwirken und über ein Netzwerk Daten austauschen. Eine einfachere Vorrichtung zeigt auch die EP 3 722 909 A1.

Der Einsatz führerloser Transportfahrzeuge (AGV) wird heutzutage über ein AGV-**Kontrollsystem** durchgeführt, welches die Fahraufträge vergibt und die einzelnen AGVs steuert. Das **AGV-Kontrollsystem** ist in der Regel eine stationäre, übergeordnete Software-/Rechnereinheit. Unterschiedlichste Grundsysteme sind bekannt, die eine Erfassung und Führung der AGV beispielsweise über Kameras, magnetische Felder, Lasersensoren, RFID-Felder im Laufweg oder Kombinationen hieraus realisieren.

Parallel zum Kontrollsystem der AGVs wird der eigentliche Fertigungs- und Logistikprozess über ein Anlagenleitsystem organisiert, wie beispielsweise ein MES/SCADA-System. Dieses **Anlagenleitsystem** organisiert beispielsweise die Produktion, Behandlung oder Lagerung von Werkstücken und damit auch die erforderlichen Maschinen oder Maschinenkomponenten. Produzierte Werkstücke oder Einheiten werden von einer Maschine ausgeschleust und können von einem AGV aufgenommen und gemäß einem hinterlegten Fahrauftrag bearbeitet oder transportiert werden.

Hierbei hat das AGV in der Regel keine direkte Kenntnis von der aufgenommenen Einheit. Ein Datenaustausch kann hierbei nur über das **Anlagenleitsystem** und die zentrale Steuerungseinheit auf der Software- bzw. den Netzwerkebenen stattfinden, indem beispielsweise das MES/SCADA-System mit dem AGV-Kontrollsystem verbunden ist.

Alternativ gibt es Lösungen, in denen auf dem AGV eine Kamera oder ein RFID-Reader implementiert ist, so dass entsprechend die zu transportierende Einheit anhand eines RFID-Tags identifiziert werden kann. Die ausgelesenen Informationen kann das AGV über eine integrierte Kommunikationsschnittstelle, beispielsweise eine Funkschnittstelle, an das AGV-Kontrollsystem übermitteln. Ein solches AGV offenbart beispielsweise die US 2021/0031240 A1.

Solche Kamerasysteme oder RFID-Reader benötigen Bauraum, entsprechenden Integrationsaufwand und sind störanfällig (Beschädigung, EMV-Probleme), wenn sie im bewegten AGV implementiert werden. Weiterhin erhöhen solche zusätzlichen Komponenten den Strombedarf sowie das Gewicht des AGVs, was nicht immer erwünscht ist.

Es ist die Aufgabe der vorliegenden Erfindung eine verbesserte Interfacevorrichtung und eine autonome Fördervorrichtung (AGV) mit solch einer Interfacevorrichtung vorzuschlagen, über die eine vereinfachte Kommunikation mit Manipulationseinheiten einer Anlage möglich ist.

Diese Aufgabe wird erfindungsgemäß gelöst durch eine Interfacevorrichtung nach den Merkmalen des Anspruchs 1, einem Behandlungsgerät nach den Merkmalen des Anspruchs 6, einer Anlage mit einem solchen Behandlungsgerät nach den Merkmalen des Anspruchs 11 sowie einem Verfahren nach den Merkmalen des Anspruchs 12. Vorteilhafte Ausgestaltungen sind in den jeweiligen, zugehörigen Unteransprüchen angegeben.

Danach wird die Aufgabe gelöst durch eine Interfacevorrichtung umfassend einen RFID-Tag, insbesondere einen passiven RFID-Tag, der eine Antenne und einen über eine interne Leitung verbundenen RFID-Chip umfasst, insbesondere zur Übermittlung eines RFID-Protokolls, wobei der RFID-Chip einen IC-Datenspeicher (Memory) umfasst und/oder hiermit verbunden ist, wobei der RFID-Chip ausgebildet und geeignet verbunden ist, um
- Funksignale über die Antenne auszutauschen und zu verarbeiten und/oder
- mit dem IC-Datenspeicher mittels eines ersten Datenprotokolls auszulesen und/oder abzuspeichern, insbesondere über die Antenne austauschbare Daten zu wandeln, **wobei** ein Mikroprozessor vorgesehen ist, der über eine
- erste externe Leitung entweder mit dem RFID-Chip und/oder dem IC-Datenspeicher verbunden ist und
- eine zweite externe Leitung mit einem Feldbus-System, einer Feldbusleitung und/oder Feldbus-Komponente verbindbar ist.

Der RFID-Chip soll vorliegend grundsätzlich nicht eingeschränkt verstanden werden und kann insbesondere RFID-Chips betreffen, die nach ISO 18000-2, ISO 11784/85, ISO 14443-A normiert sind und in einem Frequenzbereich von 125 kHz, 134,2 kHz oder 13,56 MHz arbeiten.

Es kann vorteilhaft sein, wenn zur Speicherung eines etwas größeren Datenvolumens vom RFID-Tag ein sehr einfaches Datenprotokoll vorgesehen wird. Somit kann eine Verbesserung darin bestehen, dass der Mikroprozessor ausgebildet ist und/oder ein entsprechendes Computerprogramm auf diesem ausführbar ist, um
- auf der ersten externen Leitung ein erstes Datenprotokoll zu übermitteln, wie beispielsweise ein SPI- oder 12C-Protokoll, und
- auf der zweiten externen Leitung ein zweites Datenprotokoll zu übermitteln, insbesondere ein Feldbus-Datenprotokoll, wie beispielsweise ein CAN-Bus, CANopen, insbesondere gemäß der SAE J1939.

Der SAE J1939 ist ein offener Standard für die Vernetzung und Kommunikation für Nutzfahrzeuge. Hierbei arbeitet ein zugehöriger Physical Layer (PHY) vorzugsweise mit CAN-Highspeed nach ISO11898, oder ein vergleichbares System.

Vorliegend ist unter "übermitteln" das Senden und Empfangen von Daten zu verstehen, wenn nicht etwas Unterschiedliches ausgeführt wird.

Um die Robustheit zu erhöhen und die Herstellungskosten zu senken kann es vorteilhaft sein, wenn der Mikroprozessor als Physical Layer (PHY) ausgebildet ist, das heißt, dass statt des Mikroprozessors ein PHY vorgesehen ist. Diese Ausführungsform kann dahingehend verbessert werden und baulich verkleinert werden, indem der PHY als Ersatz für den Mikroprozessor, als integraler Bestandteil des RFID-Chips ausgebildet ist. Dies kann darin bestehen, dass der PHY
- innerhalb einer eine geschlossene Struktur bildenden Antenne angeordnet ist, bei Antennen, die eine umlaufende Struktur aufweisen, wie beispielsweise die Struktur einer Spirale oder
- in der Mitte einer als Dipolantenne ausgebildeten Antenne angeordnet ist. Hierbei meint "Mitte" insbesondere eine Lage auf einer Achse, die lotrecht auf eine von den beiden Polen aufgespannten Pol-Strecke seht, idealerweise im Schnittpunkt oder Schnittbereich der Achse und der Polstrecke.

Grundsätzlich ist es sinnvoll, dass elektro-magnetische Feld der Antenne so ungestört wie möglich zu betreiben. Verläuft die erste externe Leitung und/oder die zweite externe Leitung in einem Querungsbereich quer zur Antenne oder Antennenstruktur, kann es vorteilhaft sein, wenn mindestens in dem Querungsbereich zwischen der Antenne oder der Antennenstruktur und der ersten und/oder der zweiten externen Leitung ein Abschirmelement angeordnet ist.

Dieses Abschirmelement kann insbesondere ein als metallische Folie oder metallisch beschichtete Folie ausgebildetes Abschirmelement sein. Die Folie im Querungsbereich ist dabei in einer Mittellage zwischen Antenne und der jeweiligen externen Leitung angeordnet. Mit Blick auf die vorrangige Abstrahlrichtung der Antennen zum Datenaustausch mit einem externen SLK, ist die Folie unterhalb der Antenne angeordnet und die abzuschirmenden, externen Leitungen sind darunter angeordnet.

Von der Erfindung ist weiterhin ein Behandlungsgerät umfasst, das ein Behandlungselement zur Behandlung eines Werkstücks, eine Steuereinheit, eine Spannungsquelle und mindestens ein Feldbus-System zur Datenübermittlung umfasst. Weiterhin ist auf dem Behandlungselement eine Interfacevorrichtung nach einem der vorherigen Ausführungsformen und Varianten vorgesehen. Über diese Interfacevorrichtung können zeitgleich oder zeitversetzt Daten mit einem RFID-Reader und dem Feldbus-System ausgetauscht werden.

Von der Erfindung ist auch ein Behandlungsgerät umfasst, das ein Behandlungselement zur Behandlung eines Werkstücks, eine Steuereinheit, eine Spannungsquelle und mindestens ein Feldbus-System zur Datenübermittlung aufweist. Weiterhin ist als zentrale Komponenten eine Interfacevorrichtung nach einer der vorstehenden Ausführungsformen und Varianten umfasst, mittels der zeitgleich oder zeitversetzt Daten mit einem (externen) RFID-Reader und dem internen Feldbus-System ausgetauscht werden können. Das Feldbus-System zur Datenübermittlung verbindet über die zweite externe Leitung den Mikroprozessor der Interfacevorrichtung mit der Steuereinheit des Behandlungselementes.

Bei einer Ausführungsform ist das Behandlungsgerät eine Fördervorrichtung, die als autonome Fördervorrichtung (AGV) zum Durchführen eines Transports von Werkstücken und/oder anderer Behandlungsschritte ausgebildet ist.

Bei einer Ausführungsform kann das Behandlungselement als Fördervorrichtung ausgebildet sein, in Form einer angetriebenen, fahrerlosen oder autonomen Fördervorrichtung (Autonomous Guided Vehicle - AGV). Hierbei dient das AGV zum Durchführen eines Transports von Werkstücken oder anderer Behandlungsschritte oder Arbeiten durch oder während des Verfahrens entlang einer Fahrstrecke.

Hierbei ist "Verfahren" nicht einschränkend zu verstehen und umfasst auch Stopp- und Pausenzeiten, als Teil des Verfahrens oder einer Transport- bzw. Behandlungsstrecke.

Als "Werkstück" soll hierbei jegliche Art von Elementen, eine Gruppe von Elementen oder eine Trägervorrichtung für mindestens ein Element verstanden werden, das auf oder an der Fördervorrichtung abgesetzt werden kann, um von dieser transportiert zu werden. Dabei sind Leerfahrten der Fördervorrichtung als Teil eines Transports zu werten, im Sinne einer Nach- oder Vorbereitung eines Transportes, auch zur Wartungs- und Kontrollzwecken.

Die Fördervorrichtung (AGV) umfasst eine Steuereinheit, eine motorische Antriebs- und Steuerungseinheit sowie - eine Energiespeichereinheit, die in der Regel aus einem wiederaufladbaren, elektrischen Akkumulator besteht, wobei alternativ auch ein Verbrennungsmotor oder ein hybrider Antrieb vorgesehen werden.

Eine weitere alternative Ausführungsform umfasst eine Energiekopplungseinheit, indem beispielsweise ein induktiver, magnetischer oder schleifender Kontakt zu einem entsprechenden, komplementären Kopf- oder Bodenelement oder -leiter hergestellt wird. Die Steuereinheit und die Antriebs- und Steuerungseinheit sind über ein primäres Feldbus-System mindestens datenleitend, insbesondere daten- und stromleitend verbunden, so dass die Fördervorrichtung entlang eines definierbaren Weges verfahrbar ist, wozu bedarfsweise Steuerungsdaten aus einer zentralen Anlagensteuerung und/oder einer mit dieser verbundenen Antriebskontrolleinheit eingebunden werden. Diese Übermittlung der Steuerungsdaten erfolgt insbesondere drahtlos. Bei dieser Ausführungsform kann die Interfacevorrichtung zum drahtlosen Empfang von Daten eines Übertragungselementes ausgebildet sein, das beispielsweise der Schreib-Lesekopf einer Manipulationseinheit für Werkstücke sein kann oder auch ein mobiles Endgerät (Handheld) eines Bedieners.

In Falle der Kommunikation über ein mobiles Endgerät, wie ein Smartphone, Tablet, Laptop oder einem sonstigen "Handheld"-Gerät, wäre der RFID-Reader nicht stationär als integrales oder verbundenes Bauteil einer Manipulationseinheit angeordnet, sondern es wäre möglich mobil an jedem Ort der Anlage über die Interfacevorrichtung mit beispielsweise einem Behandlungsgerät, wie einer Fördervorrichtung Daten zu übermitteln.

Dieses mobile Endgerät kann dann mittels der integrierten Funkverbindung, wie beispielsweise WLAN, Bluetooth, entweder mit der Anlagensteuerung oder mit einer Manipulationseinheit kommunizieren, sowie optional Daten aus den RFID-Tag auslesen oder abspeichern, die nicht aus der Anlagensteuerung und/oder von der Manipulationseinheit selbst stammen. Über ein mobiles Endgerät ist weiterhin eine verbesserte, leichtere Bedienung möglich, weil eine Visualisierung zu Anzeige oder Eingabezwecken vorgesehen werden kann.

Die Interfacevorrichtung ist hierbei derart ausgebildet, dass die Daten in dem IC-Datenspeicher des RFID-Chips mindestens zeitweise speicherbar sind.

Um einen möglichst energiearmen Betrieb zu ermöglichen kann es vorteilhaft sein, wenn der Mikroprozessor der Interfacevorrichtung eine Feldbus-Schaltung umfasst oder hiermit verbunden ist. Hierüber kann der Mikroprozessor beispielsweise Wake-up-Befehle empfangen und so möglichst lange in einem energiearmen Ruhemodus verbleiben.

Bei einer ergänzten Ausführungsform kann vorgesehen sein, dass das RFID-Tag als ein passives RFID-Tag ausgebildet ist und der Mikroprozessor daten- und stromleitend mit der Energiespeichereinheit und/oder der Energiekopplungseinheit als Spannungsquelle verbunden ist.

Weiter ist von der Erfindung eine Anlage zum Behandeln von Werkstücken umfasst, umfassend eine ein- oder mehrteilige Anlagensteuerung, mindestens ein Behandlungsgerät und mindestens eine Manipulationseinheit, wobei die Anlagensteuerung und die mindestens eine Manipulationseinheit insbesondere über ein zentrales Kommunikationssystem verbunden sind, und wobei das mindestens eine Behandlungsgerät über eine Datenverbindung mit der Anlagensteuerung und/oder einer ihrer Komponenten verbindbar ist. Diese Verbindung kann insbesondere über eine drahtlose Datenverbindung erfolgen. Hierbei umfasst die mindestens eine Manipulationseinheit einen kontaktlos im Nahfeld arbeitenden Lese-Kopf oder einen Schreib-Lese-Kopf, der insbesondere als ein RFID-Lesekopf (RFID-Reader) ausgebildet ist. Das von der Anlage umfasste mindestens eine Behandlungsgerät ist nach einer der vorstehend genannten Ausführungsformen und Varianten ausgebildet.

Das zentrale Kommunikationssystem kann vorteilhafterweise ein TCP/IP-basiertes Ethernet oder ein Feldbus-System sein, wobei dies nicht einschränkend zu verstehen ist.

Zusätzlich umfasst die Erfindung auch ein Verfahren zum Behandeln mindestens eines Werkstücks mit einem Behandlungsgerät, wobei Daten mindestens eindirektional und drahtlos zwischen einem Übertragungselement und dem Behandlungsgerät übermittelt werden, wobei das Übertragungselement beispielsweise der Schreib-Lesekopf einer Manipulationseinheit für Werkstücke sein kann oder auch ein mobiles Endgerät (Handheld) eines Bedieners. Weiterhin wird zur Datenspeicherung und/oder zur Datenweiterleitung eine Interfacevorrichtung in einer Ausführungsform oder Variante, wie vorstehend beschrieben, wobei folgende Schritte durchlaufen werden, beziehungsweise umfasst sind:
- Auslesen und Schreiben von Daten aus dem IC-Datenspeicher oder in den IC-Datenspeicher durch ein externes Übertragungselement, wie beispielsweise ein Lese-Kopf einer Manipulationseinheit oder eines mobilen Endgerätes,
- Senden von Daten aus dem IC-Datenspeicher an den Mikroprozessor oder Auslesen von Daten aus dem IC-Datenspeicher durch den Mikroprozessor,
- Senden von Daten vom Mikroprozessor an den IC-Datenspeicher und dortige Speicherung, und wobei der Mikroprozessor mindestens zeitweise Daten mit einem verbundenen Feldbus-System des Behandlungsgerätes austauscht.

Eine Weiterentwicklung des Verfahrens kann darin bestehen, dass das Senden und Empfangen
- zwischen dem IC-Datenspeicher und dem Mikroprozessor gemäß einem ersten Datenprotokoll erfolgt, insbesondere mit einem 12C- oder SPI-Datenprotokoll und
- zwischen dem Mikroprozessor und einem Element unterschiedlich zum RFID-Tag oder dessen RFID-Chip oder dessen IC-Datenspeicher mit einem zweiten Datenprotokoll erfolgt, das unterschiedlich vom ersten Datenprotokoll ist, insbesondere ein Feldbus-Protokoll, welches vorrangig ein CANopen, CAN-Bus oder dergleichen ist, und wobei die Konvertierung der Datenprotokolle durch den Mikrokontroller oder eine PHY erfolgt.

Weitere Einzelheiten und Vorteile der Erfindung sollen nun anhand eines in den Zeichnungen dargestellten Ausführungsbeispiels näher erläutert werden.

Es zeigen:
- Fig. 1: den Schaltungsplan der Interfacevorrichtung mit einer als Spirale ausgebildeten Antenne,
- Fig. 2: eine schematische Darstellung der Fördervorrichtung und der Anlage mit den wesentlichen Komponenten zur Datenverarbeitung und
- Fig. 3: eine zur Figur 2 erweiterte Ausführungsform der Fördervorrichtung.

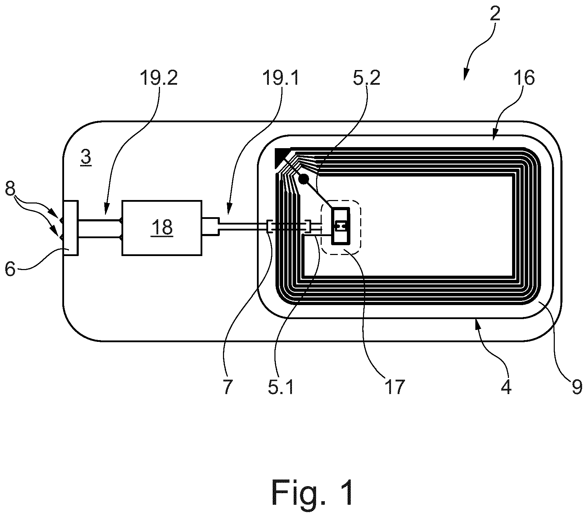

In der Fig. 1 ist eine Interfacevorrichtung 2 dargestellt, deren elektronische Komponenten alle auf einem Trägerelement 3 oder Platine aufgebracht sind. Als RFID-Tag 4 ist passiv und wird von einem externen, nicht dargestellten RFID-Reader oder Schreib-Lesekopf (SLK) angeregt. Der Tag-IC-Speicher 17 umfasst einen Chip und ein Speicherelement, ist innerhalb der spiralförmigen Antenne 16 angeordnet und über die internen Leitungen 5.1, 5.2 mit den beiden Enden der Antennenspirale leitend verbunden. Vorliegend weist der RFID-Tag 4 eine eigene Trägerfolie 9 auf, die als Rahmen dargestellt ist, wobei die Elemente auch unmittelbar auf dem Trägerelement 3 aufgebracht sein können.

Über die erste externe Leitung 19.1, die zweiadrig ausgebildet ist, ist der Tag-IC-Speicher 17 mit dem außerhalb des RFID-Tag 4 angeordneten Mikroprozessor 18 verbunden.

Im Querungsbereich der ersten externen Leitung 19.1 mit den Spiralgängen der Antenne 16, ist als Zwischenlage eine Metallfolie als Abschirmelement 7 angeordnet. Das Abschirmelement 7 weist beidseitig eine elektrische Isolationsschicht auf.

Bei einer analogen, aber nicht gezeigten Variante, sind die Adern der ersten externen Leitung 19.1 innerhalb der Antenne 16 durch die Trägerfolie 9 des RFID-Tag 4 auf dessen Rückseite geführt und das Abschirmelement 7 ist auch auf der Rückseite der Trägerfolie 9 mindestens auf einer Teilfläche im Querungsbereich der Antenne 16 angeordnet. Der Vorteil besteht darin, dass das Abschirmelement nur einseitig isoliert werden muss, weil als eine Isolationsschicht die Trägerfolie 9 genutzt werden kann.

Alternativ kann auch die erste externe Leitung 19.1 eine Isolationsschicht aufweisen oder mit einer solchen überdeckt sein. Bei einer weiteren, ebenfalls nicht dargestellten Variante kann die erste externe Leitung 19.1 mindestens im Querungsbereich mit einer Teillänge in das Trägerelement 3 vertieft eingebettet und in geeigneter Weise überdeckt oder eingegossen sein.

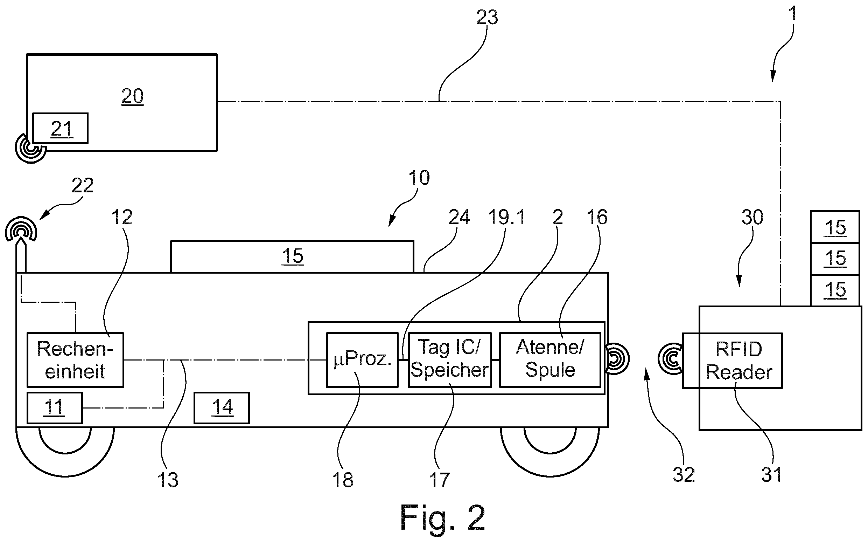

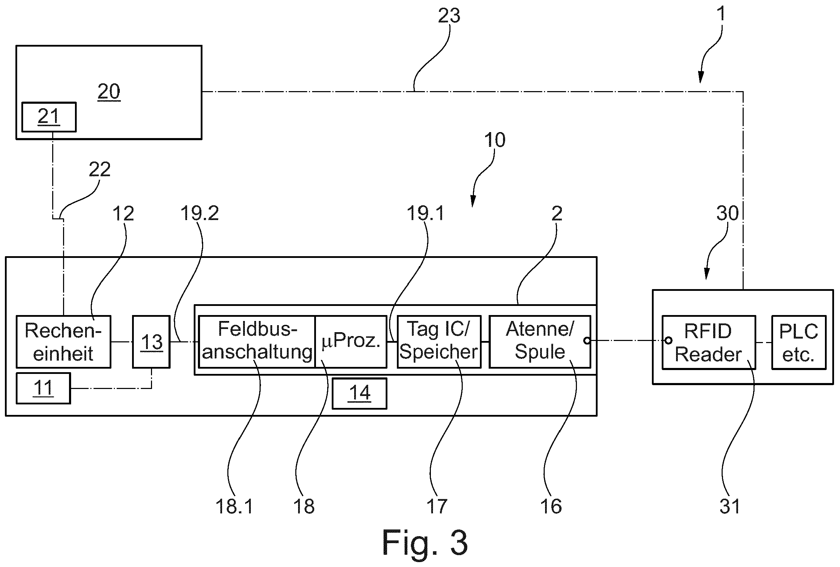

Auf der vom RFID-Tag 4 abgewandten Seite des Mikroprozessors 18 ist eine zweite externe Leitung 19.2 vorgesehen, die zu den Kontaktstellen 8 eines Interfaceelements 6 führen und worüber der Anschluss an ein in den Figuren 2 oder 3 gezeigtes Feldbus-System 13 erfolgen kann. Das Interfaceelement 6 kann als Steckverbinder oder Lötanschlusselement ausgebildet sein.

Fig. 2 zeigt einen schematischen Aufbau der Anlagen 1 einer Fördervorrichtung 10, nachfolgend nur "AGV" genannt, zum Transport eines oder mehrerer Werkstücke 15. Das AGV 10 ist mit motorisch angetriebenen Rädern oder Rollen ausgestattet, es kann aber auch ein magnetisch oder induktiv angetriebenes Fahrzeug sein. Halte- oder Überhubmittel für die Sicherung, Manipulation oder den Transfer eines Werkstücks 15 auf dem AGV 10 sind nicht dargestellt.

Im Chassis des AGV ist eine (Rechner- und) Steuereinheit 12 und eine motorische Antriebs- und Steuerungseinheit 11 sowie eine aufladbare Energiespeichereinheit 14 umfasst. Mit der Antriebs- und Steuerungseinheit 11 wird im Wesentlichen der physikalische Vortrieb und Richtungswechsel veranlasst. Steuereinheit 12 und Antriebs- und Steuerungseinheit 11 sowie weitere, nicht gezeigte Komponenten, wie beispielsweise Scanner oder Sensoren, sind über ein primäres Feldbus-System 13 daten- und stromleitend verbunden. Über eine drahtlose Datenverbindung 22 ist das AGV 10 mit der Antriebskontrolleinheit 21 der übergeordneten Anlagensteuerung 20 verbunden, die wiederum über ein Netzwerk direkt oder mittelbar mit einer Manipulationseinheit 30 verbunden ist, wobei das Netzwerk vorliegend ein IO-Link und/oder SPE-Feldbus-System 23 ist.

Auf dem AGV 10 ist neben der Steuereinheit 12 beispielsweise die Interfacevorrichtung 2 angeordnet, die dem Ausführungsbeispiel der Figur 1 entspricht, so dass die dortigen Ausführungen in analoger Weise gelten sollen. Über die Antenne 16 erfolgt der drahtlose Empfang von Daten, insbesondere Werkstückinformationen, die über einen Schreib-Lesekopf 31 der Manipulationseinheit 30 drahtlos übermittelt werden. Empfangene Werkstückinformationen, wie beispielsweise eine WarenID, Fertigungs- oder Leistungsdaten etc., werden in dem verbundenen Tag-IC-Speicher 17 mindestens für die Dauer bis zur gewünschten oder möglichen Übermittlung der Daten an die zentrale Anlagensteuerung 20 gespeichert. Hierzu ist der Tag-IC-Speicher 17 einerseits mit der Antenne 16 verbunden, aber auch über eine primäre Leitung 19.1 mit einem Mikroprozessors 18, der als Interface oder als Kopplungseinheit zur Steuereinheit 12 und insbesondere zu dem primären Feldbus-System ausgebildet ist. Dies bedeutet, dass vorliegend die primäre Leitung 19.1 als SPI (Serial Peripheral Interface) oder als I2C (Inter-Integrated Circuit) ausgelegt ist und mittels des Mikroprozessors der Transfer der Daten in das jeweils erforderliche Protokoll der angeschlossenen Feldbus-Leitung oder des angeschlossenen Feldbus-Systems erfolgt.

Bei der Ausführungsform nach Figur 3 weist das AGV 10 beziehungsweise die dortige Interfacevorrichtung 2 zusätzlich zur Ausführung nach Figur 1 eine Feldbus-Schaltung 18.1 auf, die direkt mit dem Mikroprozessor 18 verbunden ist. Hierüber ist ein Ab- und Anschalten des Netzstranges vom Mikroprozessor 18 bis zum Tag-IC-Speichers 17 möglich, wodurch dieser energiesparend betrieben werden kann. Das primäre Feldbus-System 13 übernimmt die Wake-Up-Funktion.

In dem gezeigten Beispiel sind die Feldbus-Schaltung 18.1 beziehungsweise der hierüber geschaltete Mikroprozessor 18 über eine sekundäre Leitung 19.2 eines sekundären Feldbus-Systems zum primären Feldbussystem 13 beziehungsweise der ersten Feldbuskomponenten des primären Feldbus-Systems 13 verbunden. Das sekundäre Feldbus-System ist vorliegend ein CANopen-Feldbus.

Sonstige Bauteile und Module der Datenübertragung und/oder Datenkonvertierung, wie beispielsweise Analog-Digital-Converter (ADC), PYH, etc. sind dem Fachmann bekannt und müssen bedarfsweise ergänzt werden.

Vorliegend wurden bei der Nennung von Feldbus-Systemen vorrangig datentechnische Aspekte beschrieben, wobei die zugehörigen und in der Regel normierten versorgungsrelevanten Aspekte, wie beispielsweise die Spannungshöhe, Spannungsart (AC/DC), Anzahl von erforderlichen Adern etc. dem Fachmann bekannt sind und in geeigneter Weise beachtet werden müssen.

### Bezugszeichenliste

- 1: Anlage
- 2: Interfacevorrichtung
- 3: Trägerelement
- 4: RFID-Tag
- 5: Leitung, Anbindung der Antenne, auch 5.1, 5.2
- 6: Interfaceelement
- 7: Abschirmelement
- 8: Kontaktstelle
- 9: Trägerfolie

- 10: Fördervorrichtung, auch AGV
- 11: Antriebs- und Steuerungseinheit
- 12: Steuereinheit
- 13: Feldbus-System
- 14: Energiespeichereinheit
- 15: Werkstück
- 16: Antenne
- 17: Tag-IC-Speicher
- 18: Mikroprozessor (µC)
- 19.1: Leitung, primäre
- 19.2: Leitung, sekundäre

- 20: Anlagensteuerung
- 21: Antriebskontrolleinheit
- 22: Datenverbindung
- 23: Kommunikationssystem, Feldbus-Verbindung
- 24: Behandlungselement

- 30: Manipulationseinheit
- 31: Übertragungselement, Schreib-Lesekopf (SLK)
- 32: Datenverbindung

## Patentansprüche

1. Interfacevorrichtung (2) umfassend einen RFID-Tag (4), insbesondere einen passiven RFID-Tag (4), der eine Antenne (16) und einen über eine interne Leitung (5, 5.1, 5.2) verbundenen RFID-Chip (17) umfasst, insbesondere zur Übermittlung eines RFID-Protokolls, wobei der RFID-Chip (17) einen IC-Datenspeicher umfasst und/oder hiermit verbunden ist, wobei der RFID-Chip (17) ausgebildet und geeignet verbunden ist, um
- Funksignale über die Antenne (16) auszutauschen und zu verarbeiten und/oder
- mit dem IC-Datenspeicher mittels eines ersten Datenprotokolls auszulesen und/oder abzuspeichern, insbesondere über die Antenne (16) austauschbare Daten zu wandeln, **dadurch gekennzeichnet, dass**
ein Mikroprozessor (18) vorgesehen ist, der über eine
- erste externe Leitung (19.1) entweder mit dem RFID-Chip (17) und/oder dem IC-Datenspeicher verbunden ist und
- zweite externe Leitung (19.2) mit einem Feldbus-System (13), einer Feldbusleitung und/oder Feldbus-Komponente verbindbar ist.

2. Interfacevorrichtung (2) nach Anspruch 1, **dadurch gekennzeichnet, dass** der Mikroprozessor (18) ausgebildet ist und/oder ein entsprechendes Computerprogramm auf diesem ausführbar ist, um
- auf der ersten externen Leitung (19.1) ein ersten Datenprotokoll zu übermitteln, insbesondere ein SPI- oder 12C-Protokoll, und
- auf der zweiten externen Leitung (19.2) ein zweites Datenprotokoll zu übermitteln, insbesondere ein Feldbus-Datenprotokoll, insbesondere ein CAN-Bus, CANopen, insbesondere gemäß der SAE J1939, oder ein vergleichbares System.

3. Interfacevorrichtung (2) nach einem der vorherigen Ansprüche, **dadurch gekennzeichnet, dass** der Mikroprozessor (18) als Physical Layer (PHY) ausgebildet ist.

4. Interfacevorrichtung (2) nach einem der vorherigen Ansprüche, **dadurch gekennzeichnet, dass** der Mikroprozessor (18)
- innerhalb einer eine geschlossene Struktur bildenden Antenne (16) oder
- in der Mittel einer als Dipolantenne ausgebildeten Antenne (16) angeordnet ist.

5. Interfacevorrichtung (2) nach einem der vorherigen Ansprüche, **dadurch gekennzeichnet, dass** die erste externe Leitung (19.1) oder die zweite externe Leitung (19.2) in einem Querungsbereich quer zur Antenne (16) verläuft, und wobei mindestens in dem Querungsbereich zwischen der Antenne (16) und der ersten oder der zweiten externen Leitung (19.1, 19.2) ein Abschirmelement (7) angeordnet ist, insbesondere ein als Folie oder (metallische) Beschichtung ausgebildetes Abschirmelement (7).

6. Behandlungsgerät, umfassend ein Behandlungselement (24) zur Behandlung eines Werkstücks (15), eine Steuereinheit (12), eine Spannungsquelle und mindestens ein Feldbus-System (13) zur Datenübermittlung,
**dadurch gekennzeichnet, dass**
eine Interfacevorrichtung (2) nach einem der vorherigen Ansprüche 1 bis 5 vorgesehen ist, mittels dem zeitgleich oder zeitversetzt Daten mit einem RFID-Reader (31) und dem Feldbus-System (13) ausgetauscht werden können.

7. Behandlungsgerät nach Anspruch 6, **dadurch gekennzeichnet, dass** das Behandlungsgerät eine Fördervorrichtung (10) ist, die als autonome Fördervorrichtung (AGV) zum Durchführen eines Transports von Werkstücken (15) oder anderer Behandlungsschritt ausgebildet ist.

8. Behandlungsgerät nach Anspruch 7, **dadurch gekennzeichnet, dass** dieses Behandlungsgerät als autonome Fördervorrichtung (10) ausgebildet ist und eine Steuereinheit (12), eine motorische Antriebs- und Steuerungseinheit (11) sowie eine Energiespeichereinheit (14) und/oder eine Energiekopplungseinheit umfasst, wobei die Steuereinheit (12) und die Antriebs- und Steuerungseinheit (11) über das Feldbus-System (13) direkt oder mittelbar verbunden sind, so dass die Fördervorrichtung (10) entlang eines definierbaren Weges verfahrbar ist, wobei die Steuereinheit (12) mit einer übergeordneten Anlagensteuerung (20) und/oder einer mit dieser verbundenen Antriebskontrolleinheit (21) verbindbar ist, insbesondere drahtlos verbindbar ist, wobei weiterhin
- die Interfacevorrichtung (2) zum drahtlosen Empfang von Daten von einem Übertragungselement (31) ausgebildet, wie einem Schreib-Lese-Kopf einer Manipulationseinheit (30) für Werkstücke (15), wobei die Daten in dem IC-Datenspeicher mindestens zeitweise speicherbar sind.

9. Behandlungsgerät nach einem der Ansprüche 6 bis 8, **dadurch gekennzeichnet, dass** der Mikroprozessor (18) der Interfacevorrichtung (2) eine Feldbus-Schaltung (18.1) umfasst oder hiermit verbunden ist.

10. Behandlungsgerät nach einem der vorherigen Ansprüche 6 bis 9, **dadurch gekennzeichnet, dass** das RFID-Tag (4) als ein passives RFID-Tag (4) ausgebildet ist und der Mikroprozessor (18) daten- und/stromleitend mit der Energiespeichereinheit (14) und/oder der Energiekopplungseinheit als Spannungsquelle verbunden ist.

11. Anlage (1) zum Behandeln von Werkstücken (15), umfassend eine ein- oder mehrteilige Anlagensteuerung (20), mindestens ein Behandlungsgerät und mindestens eine Manipulationseinheit (30), wobei die Anlagensteuerung (20) und die mindestens eine Manipulationseinheit (30) insbesondere über ein zentrales Kommunikationssystem (23) verbunden sind, wie insbesondere ein TCP/IPbasiertes Ethernet oder eine Feldbus-System, und wobei das mindestens eine Behandlungsgerät über eine Datenverbindung (22) mit der Anlagensteuerung (20) und/oder einer ihrer Komponenten verbindbar ist, insbesondere über eine drahtlose Datenverbindung (22), **dadurch gekennzeichnet, dass** die mindestens eine Manipulationseinheit (30) einen kontaktlos im Nahfeld arbeitenden Lese-Kopf (31) oder einen Schreib-Lese-Kopf umfasst, insbesondere einen RFID-Lesekopf (RFID-Reader), und wobei das mindestens eine Behandlungsgerät nach einem der Ansprüche 6 bis 10 ausgebildet ist.

12. Verfahren zum Behandeln mindestens eines Werkstücks (15) mit einem Behandlungsgerät, wobei Daten mindestens eindirektional und drahtlos zwischen einer Manipulationseinheit (30) und einem Behandlungsgerät übermittelt werden,
**dadurch gekennzeichnet, dass**
- zur Datenspeicherung und/oder zur Datenweiterleitung eine Interfacevorrichtung (2) nach einem der Ansprüche 1 bis 5 verwendet wird, wobei folgende Schritte umfasst sind:
- Auslesen und Schreiben von Daten aus dem IC-Datenspeicher oder in den IC-Datenspeicher durch einen externen Lese-Kopf (31) einer Manipulationseinheit (30),
- Senden von Daten aus dem IC-Datenspeicher an den Mikroprozessor (18) oder Auslesen von Daten aus dem IC-Datenspeicher durch den Mikroprozessor (18),
- Senden von Daten vom Mikroprozessor (18) an den IC-Datenspeicher und dortige Speicherung, und wobei der Mikroprozessor (18) mindestens zeitweise Daten mit einem verbundenen Feldbus-System (13) austauscht.

13. Verfahren nach Anspruch 12, **dadurch gekennzeichnet, dass** das Senden und Empfangen zwischen
- dem IC-Datenspeicher und dem Mikroprozessor (18) gemäß einem ersten Datenprotokoll erfolgt, insbesondere mit eine I2C- oder SPI-Datenprotokoll und
- dem Mikroprozessor und einem Element unterschiedlich zum RFID-Tag (4) oder dessen RFID-Chip (17) oder dessen IC-Datenspeicher mit einem zweiten Datenprotokoll erfolgt, das unterschiedlich ist vom ersten Datenprotokoll, insbesondere ein Feldbus-Protokoll, vorrangig ein CANopen, CAN-Bus oder dergleichen ist, und wobei die Konvertierung der Datenprotokolle durch den Mikrokontroller (18) erfolgt.
